# DEMANDE DE BREVET EUROPEEN

(11) **EP 4 297 369 A1**
(43) Date de publication de la demande: **27.12.2023**
(21) Numéro de dépôt: 23180722.3
(22) Date de dépôt: 21.06.2023
(51) Int. Cl.: H04L 65/1069, H04L 65/1104, H04W 4/08, H04L 41/0893, H04L 65/403, H04L 41/5051, H04L 65/1093

(54) **PROCÉDÉ ET DISPOSITIF DE DISCRIMINATION DE REQUÊTES DANS UN REGROUPEMENT DE GROUPES DANS UN RÉSEAU 3GPP MCS**

(30) Priorité: 22.06.2022 FR 2206125
(71) Demandeur: Airbus DS SLC, 78990 Elancourt (FR)
(72) Inventeur: Paterour, Olivier, 78990 Elancourt (FR); Piroard, François, 78990 Elancourt (FR)
(74) Mandataire: Cabinet Camus Lebkiri

(57) **Abrégé**

Un aspect de l'invention concerne un procédé (1) de discrimination, par une première entité cliente destinataire (C2), de requêtes dans un réseau de communication selon le standard 3GPP MCS « 3rd Génération Partnership Program Mission-Critical System », dans lequel les requêtes reçues par l'entité cliente destinataire (C2) comprennent une première requête de service de mission critique provenant du serveur non-contrôleur (NC2) du deuxième groupe de communication (G2) et d'une deuxième requête de service de mission critique provenant du serveur non-contrôleur (NC3) du troisième groupe de communication (G3),chaque requête reçue comprenant au moins une information de groupe d'appartenance du serveur non-contrôleur émetteur de la requête.

## Description

### DOMAINE TECHNIQUE DE L'INVENTION

Le domaine technique de l'invention est celui des télécommunications.

La présente invention concerne un procédé de discrimination de requêtes dans un regroupement de groupes dans un réseau selon le standard 3GPP MCS et en particulier d'une pluralité de requêtes à destination d'un même dispositif utilisateur appartenant à plusieurs groupes compris dans un même regroupement de groupes.

### ARRIERE-PLAN TECHNOLOGIQUE DE L'INVENTION

Les normes de radiocommunication PMR (selon la dénomination anglo-saxonne « Professional Mobile Radio » pour « Radio Mobile Professionnelle ») TETRAPOL^{®}, TETRA^{®} ou encore P25^{®} permettent la mise en oeuvre de réseaux professionnels sécurisés. Ces réseaux à bande étroite sont des réseaux nationaux ou locaux : ils sont implémentés par exemple au sein d'une organisation telle qu'une entreprise, au sein d'un pays par exemple pour les communications des pompiers, des forces de l'ordre, des militaires etc.

Ces réseaux évoluent vers une prise en charge d'échanges en large bande. Le standard 3GPP régissant les réseaux mobiles de type « GSM » selon la dénomination anglo-saxonne « Global System for Mobile Communications », notamment dans leurs troisième, quatrième et cinquième générations respectivement appelées « 3G », « 4G » et « 5G », et générations suivantes, et plus particulièrement dans les déploiements faisant appel à des services de communications critiques définis par le 3GPP appelés « MCS » selon la dénomination anglo-saxonne « Mission Critical Services » permet ces échanges sécurisés en large bande. Un réseau 3G, 4G ou 5G met en oeuvre un équipement terminal 3G/4G/5G (appelé UE de l'anglais « User Equipement »), un réseau d'accès radio RAN (de l'anglais « Radio Access Network ») 3G/4G/5G et un coeur de réseau (3G/4G/5G). Les déploiements des services MCS en large bande ne se limitent bien entendu pas aux réseaux mobiles 3G/4G/5G mais incluent aussi des déploiements dans des réseaux IP (de l'anglais « Internet Protocol ») fixes et mobiles, par exemple des WLAN, de l'anglais « Wide Local Area Network ».

On entend par « réseau de communication selon le standard 3GPP MCS », un réseau de communication compatible avec le standard 3GPP MCS et plus particulièrement avec la version actuelle du 3GPP qui est la version 17, avec les versions précédentes à partir de la version 13 et avec les versions suivantes intégrant toutes les caractéristiques de l'invention.

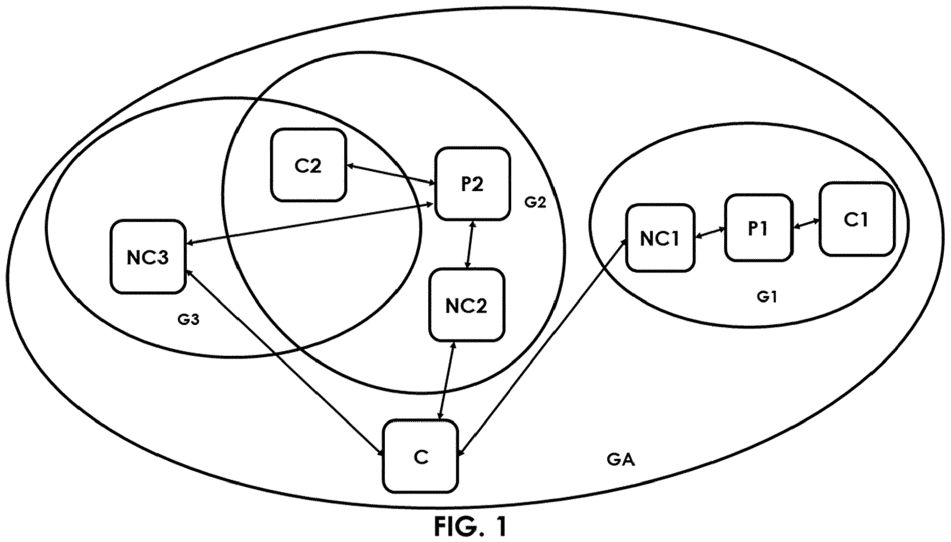

Un tel réseau est par exemple représenté à la Figure 1. Ce réseau comprend plusieurs clients C1 et C2, chacun connecté à un serveur participant respectivement P1 et P2 (pour « Participating » selon la dénomination du 3GPP MCS en anglais). Les serveurs participants P1 et P2 peuvent communiquer avec d'autres serveurs du réseau. A la Figure 1, les serveurs participants P1 et P2 communiquent chacun avec au moins un serveur Non-contrôleur (pour « Non Controlling » selon la dénomination du 3GPP MCS en anglais). Le serveur participant P1 communique avec le serveur non-contrôleur NC1 et le serveur participant P2 avec le serveur non-contrôleur NC2 et avec le serveur non-contrôleur NC3. Chaque serveur non-contrôleur NC1 à NC3 communique avec un même serveur contrôleur C (pour « Controlling » selon la dénomination du 3GPP MCS en anglais). Les serveurs participant P1 et P2, contrôleur C et non-contrôleur NC1 à NC3 sont des serveurs de type « MCX servers » tels que définis dans le 3GPP MCS.

Le réseau représenté à la Figure 1 comprend plusieurs groupes de communication G1 à G3, les groupes G1 et G2 comprenant un client respectivement C1 et C2, et un serveur participant respectivement P1 et P2. Chaque groupe de communication G1 à G3 comprend un serveur non-contrôleur respectivement NC1 à NC3. Le client C2 appartient et au groupe de communication G2 et au groupe de communication G3. Le groupes de communication G1 à G3 sont regroupés en un regroupement de groupes de communication GA. Les serveurs participants P1 et P2 sont des serveurs qui ont en charge la gestion des clients du groupe de communication auquel ils appartiennent. Le serveur participant respectivement P1 et P2 a la gestion du client respectivement C1 et C2. Le serveur Contrôleur C a en charge la gestion du regroupement de groupes de communication GA. Les serveurs Non-Contrôleurs NC1 à NC3 peuvent être vus comme des sous-serveurs du regroupement de groupes de communication et ont en charge la gestion d'un ou plusieurs des groupes « constituant » G1 à G3 du regroupement GA de groupes de communication.

Lorsque les fonctions « participant », « contrôleur » et « non-contrôleur » sont mises en oeuvre par des serveurs indépendants, on parle alors de « serveur participant », « serveur contrôleur » et « serveur non-contrôleur ». Lorsqu'elles sont toutes mises en oeuvre par un même serveur ou réparties sur plusieurs serveurs, on parle alors de « fonction participant », « fonction contrôleur » et « fonction non-contrôleur ». Les termes « fonction » et « serveur » pourront alors être utilisés de manière interchangeable dans la suite de la description, et ne dépendent que de l'implémentation choisie. On utilisera principalement la dénomination « serveur », ceci n'empêchant en rien qu'un même dispositif physique mette en oeuvre une ou plusieurs des fonctions « participant », « contrôleur » et/ou « non-contrôleur ».

Dans le standard 3GPP MCS, les services de communication suivants sont définis :
- MCPTT, de l'anglais « Mission Critical Push To Talk » pour « Appuyer Pour Parler en Mission Critique » en français, qui permet de réaliser des communications voix,
- MCVideo, qui permet de réaliser des communications vidéo,
- MCData, qui comprend trois sous-services :
   - SDS de l'anglais « Short Data Service » pour « Service de données courtes » en français et
   - FD de l'anglais « File Distribution » pour « Distribution de fichier » en français,
   - IPCon de l'anglais « IP Connectivity » pour « Connectivité IP » en français.

Par la suite, par « serveur MCX », on fera référence à un serveur du réseau configuré pour mettre en oeuvre tout service de communication du 3GPP MCS, c'est-à-dire MCPTT, MCData ou MCVideo.

Chaque client C1 et C2 est un dispositif utilisateur, aussi appelé équipement utilisateur (UE) ou entité cliente, et est par exemple un smartphone, une tablette, un ordinateur portable ou tout autre dispositif, par exemple une clé 4G/5G, permettant de communiquer au sein d'un réseau. Un dispositif utilisateur comprend au moins une mémoire et au moins un processeur, la mémoire comprenant des instructions qui, lorsqu'elles sont exécutées par le processeur, conduisent l'équipement utilisateur à mettre en oeuvre les actions qui lui sont attribuées dans la suite de la description. Préférentiellement, les dispositifs utilisateur comprennent un module d'affichage. De la même manière, les différents serveurs MCX C, P1, P2et NC1 à NC3, sont des dispositifs comprenant au moins une mémoire et au moins un processeur, la mémoire comprenant des instructions qui, lorsqu'elles sont exécutées par le processeur, conduisent le serveur à mettre en oeuvre les actions qui lui sont attribuées dans la suite de la description. Les serveurs et les dispositifs utilisateurs sont reliés entre eux et forment au moins un réseau telque celui représenté à la Figure 1, ce réseau mettant en oeuvre des communications filaires, sans fil, ou toute combinaison.

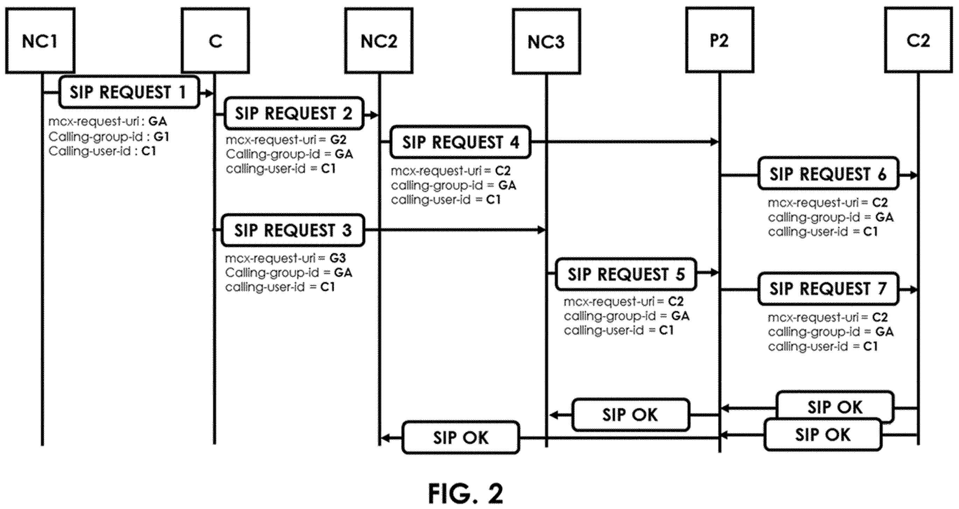

Le client C2 appartient au groupe de communication G2 et au groupe de communication G3. Il est ainsi géré, au sein du groupe G2 et du groupe G3, par le serveur participant P2. Ainsi, lorsqu'une communication est destinée au groupe G2, le serveur participant P2 informe le client C2 de la communication, et lorsqu'une communication est destinée au groupe G3, le serveur participant P2 informe le client C2 de la communication. Un problème apparait lorsqu'un client appartenant à un groupe du regroupement de groupes GA cherche à communiquer au sein du regroupement de groupes GA. Un tel problème est représenté à la Figure 2.

Le problème intervient lorsqu'une requête émise par un client du regroupement de groupes est à destination du même regroupement de groupes. Dans l'exemple de la figure 1, le client C1 émet une requête à destination du regroupement de groupes, par exemple une requête de communication. Pour cela, selon le standard 3GPP MCS, cette requête est d'abord transmise au serveur participant qui gère le client C1 au sein de son groupe de communication G1, c'est-à-dire le serveur participant P1, puis à son serveur non-contrôleur NC1. Le serveur non-contrôleur NC1 remonte alors la requête au serveur contrôleur C, qui est chargé de la transmettre à chaque autre groupe de communication appartenant au regroupement de groupes de communication GA, c'est-à-dire aux groupes G2 et G3.

Une telle requête, dans le standard 3GPP MCS, est du type « SIP », SIP étant un protocole d'initiation de session (« Session Initiation Protocol » en anglais). Une requête SIP, aussi appelée « SIP REQUEST », peut être une invitation de type « SIP INVITE », définie par la RFC 3261, ou un message de type « SIP MESSAGE ».

La requête SIP REQUEST 1 est une requête d'invitation à établir une session dans le regroupement de groupes GA. Dans le cadre du standard 3GPP MCS, ce message comprend un champ <mcx-request-uri> indiquant le groupe destinataire de la communication, c'est-à-dire le groupe global de regroupement (« regroup ») GA dans l'exemple de la Figure 2.

La requête SIP REQUEST 1 comprend aussi un champ <calling-group-id> indiquant à quel groupe de communication compris dans le groupe global GA le client C1 appartient. Le groupe G1 du client C1 compris dans le groupe global GA est appelé « constituent », appelé ainsi car il fait partie des trois groupes « constituant » le groupe global GA.

Enfin, la requête comprend un champ <calling-user-id> comprenant l'identifiant du client C1 à l'origine de la requête.

Lorsque cette requête parvient au serveur contrôleur C du groupe global GA, le serveur contrôleur C dispatche cette requête aux serveurs non-contrôleurs de chaque autre groupe constituant le groupe global GA, c'est-à-dire à NC2 et NC3, comme représenté à la Figure 2. La requête est donc dupliquée pour chaque groupe, le serveur contrôleur C envoie donc une requête SIP REQUEST 2 au serveur non-contrôleur NC2 et une requête SIP REQUEST 3 au serveur non-contrôleur NC3. Chaque requête indique, dans le champ <mcx-request-uri>, le groupe destinataire de la communication, c'est-à-dire le groupe G2 pour la SIP REQUEST 2 et le groupe G3 pour la SIP REQUEST 3 et dans le champ <calling-group-id>, le groupe de communication auquel le serveur contrôleur C appartient, c'est-à-dire le groupe GA.

Le serveur non-contrôleur NC2 reçoit la requête SIP REQUEST 2 et le serveur non-contrôleur NC3 reçoit la requête SIP REQUEST 3. Chaque serveur non-contrôleur va alors transmettre cette requête aux serveurs participants de leurs groupes respectifs. Le serveur participant P2 va donc recevoir la requête SIP REQUEST respectivement 4 et 5, respectivement du serveur non-contrôleur NC2 et du serveur non-contrôleur NC3. Il va ensuite transmettre la requête aux clients qu'il gère, incluant le client C2 qui appartient aux groupes G2 et G3. Ainsi, le serveur participant P2 va transmettre une requête SIP REQUEST respectivement 6 et 7 au client C2, les requêtes SIP REQUEST 6 et SIP REQUEST 7 étant identiques. Le client C2 n'a alors aucun moyen de savoir duquel du serveur non-contrôleur NC2 ou du serveur non-contrôleur NC3 provient chacune des requêtes SIP REQUEST 6 et SIP REQUEST 7. Le client C2 peut cependant avoir des rôles différents dans les différents groupes G2 et G3 dont il est membre, par exemple un rôle de « dispatcher » ou de chef d'équipe, impliquant des priorités différentes, qui peuvent par exemple lui permettre ou non de préempter le droit de parole à d'autres utilisateurs du groupe ayant une priorité moindre, ou encore utiliser des alias fonctionnels différents dans les différents groupes, qui peuvent donner une information d'identification complémentaire aux autres utilisateurs participant au regroupement.

Le client C2 recevant chaque requête, même s'il peut savoir par la structure du regroupement qu'il va recevoir plusieurs requêtes similaires, ne peut pas choisir au titre duquel des groupes constituants il va traiter la requête, et donc éventuellement choisir son rôle, sa priorité ou son alias fonctionnel dans le regroupement.

De plus, dans le protocole, le client C2 est obligé de répondre à chaque requête reçue. Il existe donc un risque que le client C2 accepte chacune des différentes requêtes, ce qui peut conduire à établir de multiples sessions identiques de media par exemple voix ou vidéo qui pourront avoir un impact sur les performances globales du réseau.

Il existe alors un besoin de résoudre les problèmes présentés précédemment.

### RESUME DE L'INVENTION

L'invention offre une solution aux problèmes évoqués précédemment, en permettant à une entité cliente recevant une multitude de requêtes identiques de discriminer les requêtes reçues.

Un aspect de l'invention concerne un procédé de discrimination, par une première entité cliente destinataire, de requêtes dans un réseau de communication selon le standard 3GPP MCS « 3rd Generation Partnership Program Mission-Critical System », le réseau de communication comprenant au moins :
- un groupe global de communication regroupant une pluralité de groupes de communication,
- au moins une entité cliente émettrice affiliée à un premier groupe de communication de la pluralité de groupes de communication,
- l'entité cliente destinataire, affiliée au moins à un deuxième et à un troisième groupes de communication de la pluralité de groupes de communication,
- un serveur contrôleur en charge de la gestion du groupe global de communication,
- au moins un serveur participant gérant chaque entité cliente,
- pour chaque groupe de communication de la pluralité de groupes de communication :
- au moins un serveur non-contrôleur du groupe global de communication en charge de la gestion du groupe de communication,

le procédé comprenant au moins les étapes de :
- transmission, par l'entité émettrice, via le serveur participant gérant l'entité émettrice et le serveur non-contrôleur du premier groupe, au serveur contrôleur, d'une requête de service de mission critique au sein du groupe global,
- détermination, par le serveur contrôleur, des groupes de communication compris dans le groupe global de communication,
- transmission de la requête de service de mission critique, par le serveur contrôleur, au serveur non-contrôleur de chaque groupe de communication déterminé comme compris dans le groupe global de communication,
- détermination, par chaque serveur non-contrôleur, des entités clientes destinataires de la requête de service mission critique,
- transmission de la requête de service de mission critique, par chaque serveur non-contrôleur, à chaque entité cliente destinataire déterminée, via le serveur participant gérant l'entité cliente destinataire déterminée,
- réception d'au moins une première requête de service de mission critique provenant du serveur non-contrôleur du deuxième groupe de communication et d'une deuxième requête de service de mission critique provenant du serveur non-contrôleur du troisième groupe de communication, par la première entité cliente destinataire, chaque requête reçue comprenant au moins une information de groupe d'appartenance du serveur non-contrôleur émetteur de la requête,
- acceptation, par la première entité cliente destinataire, d'une requête parmi la première et la deuxième requête en fonction de l'information de groupe d'appartenance du serveur non-contrôleur émetteur de la requête.

Grâce à l'invention, une entité cliente destinataire de requêtes identiques provenant de plusieurs groupes de communication auxquels elle appartient peut discriminer ces requêtes et n'en accepter qu'une, résolvant les problèmes de l'art antérieur. Ainsi, il est possible pour une entité cliente de choisir le rôle qu'elle aura dans une communication en connaissant le groupe de communication au titre duquel elle reçoit chaque requête et en choisissant la requête qui lui convient, et donc le groupe de communication à partir duquel elle va accepter la requête de service dans le groupe global de communication.

Outre les caractéristiques qui viennent d'être évoquées dans le paragraphe précédent, le procédé selon un aspect de l'invention peut présenter une ou plusieurs caractéristiques complémentaires parmi les suivantes, considérées individuellement ou selon toutes les combinaisons techniquement possibles :
- Le procédé comprend une étape d'ajout, à la requête, de l'information de groupe d'appartenance du serveur non-contrôleur émetteur de la requête,
- l'étape d'ajout à la requête de l'information de groupe d'appartenance du serveur non-contrôleur émetteur de la requête est mise en oeuvre par le serveur non-contrôleur avant l'étape de transmission de la requête par le serveur non-contrôleur,
- Le procédé comprend une étape de rejet de la requête non acceptée parmi la première et la deuxième requête en fonction de l'information de groupe d'appartenance du serveur non-contrôleur émetteur de la requête,
- le rejet comprend l'envoi d'une requête de rejet, de la première entité cliente destinataire au serveur non-contrôleur émetteur de la requête de service de mission critique rejetée,
- l'acceptation de la requête est réalisée sur la base d'une configuration de l'entité cliente destinataire.

Un autre aspect de l'invention concerne un réseau de communication selon le standard 3GPP MCS « 3rd Generation Partnership Program Mission-Critical System », le réseau de communication comprenant au moins :
- un groupe global de communication regroupant une pluralité de groupes de communication,
- au moins une entité cliente émettrice affiliée à un premier groupe de communication de la pluralité de groupes de communication,
- au moins une entité cliente destinataire, affiliée au moins à un deuxième et à un troisième groupes de communication de la pluralité de groupes de communication,
- un serveur contrôleur en charge de la gestion du groupe global de communication,
- au moins un serveur participant gérant chaque entité cliente affiliée au groupe de communication,
- pour chaque groupe de communication de la pluralité de groupes de communication :
- au moins un serveur non-contrôleur du groupe global de communication en charge de la gestion du groupe de communication,

le réseau de communication étant configuré pour mettre en oeuvre le procédé selon l'invention.

Dans un mode de réalisation, le réseau est un réseau de troisième génération « 3G », de quatrième génération « 4G » ou de cinquième génération « 5G », dans lequel le premier dispositif utilisateur est un équipement utilisateur « UE », le premier réseau comprenant au moins un coeur de réseau et au moins un réseau d'accès radio « RAN ».

Un autre aspect de l'invention concerne un produit programme d'ordinateur comprenant des instructions qui conduisent le réseau selon l'invention à exécuter les étapes de la méthode selon l'invention.

Un autre aspect de l'invention concerne un support lisible par ordinateur, sur lequel est enregistré le programme d'ordinateur selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un réseau de communication de l'état de l'art dans lequel le problème se pose.
- La figure 2 montre une représentation schématique d'un procédé de l'état de l'art de requête de service de mission critique dans un groupe global de communication.
- La figure 3 montre une représentation schématique d'un procédé selon l'invention.
- La figure 4 montre une représentation schématique d'un procédé modifié selon l'invention de requête de service de mission critique dans un groupe global de communication.

### DESCRIPTION DETAILLEE

Les figures sont présentées à titre indicatif et nullement limitatif de l'invention.

Sauf précision contraire, un même élément apparaissant sur des figures différentes présente une référence unique.

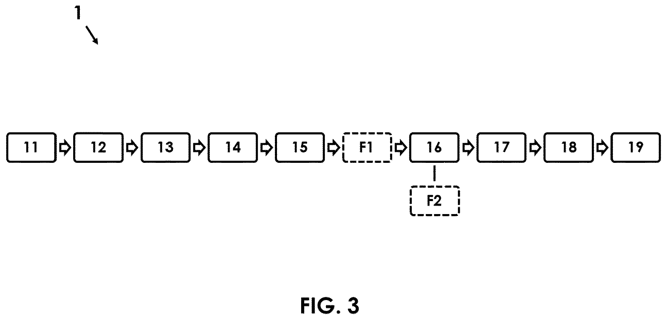

La figure 3 montre une représentation schématique d'un procédé de discrimination de requêtes selon l'invention.

Le procédé 1 selon l'invention est mis en oeuvre par un réseau de communication selon le standard 3GPP MCS. Pour illustrer la mise en oeuvre du procédé selon l'invention, le réseau de communication selon le standard 3GPP MCS de la figure 1, déjà présenté dans l'état de l'art de la présente demande, sera utilisé. Ainsi, le procédé 1 selon l'invention peut être mis en oeuvre par le réseau de la figure 1. Dans un tel cas, l'entité cliente émettrice d'une requête de service de mission critique est l'entité cliente, ou client, C1. L'entité cliente destinataire est l'entité cliente, ou client, C2.

Dans le procédé 1 selon l'invention, une discrimination est possible par l'entité cliente destinataire C2 grâce à une information ajoutée à chaque requête à destination de l'entité cliente destinataire C2.

Le procédé 1 selon l'invention comprend une première étape 11 de transmission, par l'entité cliente émettrice C1, via le serveur participant P1 du premier groupe G1 et via le serveur non-contrôleur NC1, au serveur contrôleur C, d'une requête de service de mission critique au sein du groupe global GA. Une telle requête est identique à la requête SIP REQUEST 1 de l'état de l'art.

Dans une étape 12 du procédé 1 selon l'invention, le serveur contrôleur C détermine les groupes constituant le groupe global GA, c'est-à-dire les groupes G1 à G3. Pour cela, le serveur contrôleur C a connaissance des groupes constituant le groupe global GA, par exemple parce qu'il stocke un fichier de configuration de regroupement de groupes.

Le serveur contrôleur C transmet ensuite, dans une étape 13, chaque requête SIP REQUEST 2 et SIP REQUEST 3 respectivement aux groupes de communication G2 et G3. On entend par « transmettre à un groupe de communication » la transmission au serveur non-contrôleur du groupe de communication compris dans le groupe global.

Chaque serveur non-contrôleur appartenant à un groupe déterminé à l'étape 12 reçoit alors une requête du serveur contrôleur C. Ainsi, le serveur non-contrôleur NC2 reçoit une requête SIP REQUEST 2 et le serveur non-contrôleur NC3 reçoit une requête SIP REQUEST 3.

Dans une étape 14, chaque serveur non-contrôleur détermine les entités clientes destinataires de la requête de service mission critique. Un serveur non-contrôleur ayant pour mission de gérer le groupe, le serveur non-contrôleur a connaissance des entités clientes du groupe, par exemple car il stocke un fichier listant les entités clientes, ainsi que leurs rôles au sein du groupe et donc peuvent savoir si ces entités clientes sont destinataires de la requête de service de mission critique.

L'information de groupe constituant ajoutée dans la requête est ajoutée à la requête par chaque serveur non-contrôleur à une étape 15. En effet, celui-ci a connaissance du groupe constituant qu'il gère, par le champ <mcx-request-uri> reçu de C, et va transmettre la requête dans une étape 16. A l'étape 15, le serveur non-contrôleur ajoute l'information du groupe constituant auquel il appartient à la requête. Ainsi, à la requête SIP REQUEST 4 est ajoutée l'information de groupe constituant G2, par le serveur non-contrôleur NC2, qui appartient au groupe G2, préférentiellement dans un champ d'en-tête « associated-group-id ». De la même façon, à la requête SIP REQUEST 5 est ajoutée l'information de groupe constituant G3, par le serveur non-contrôleur NC3, qui appartient au groupe G3.

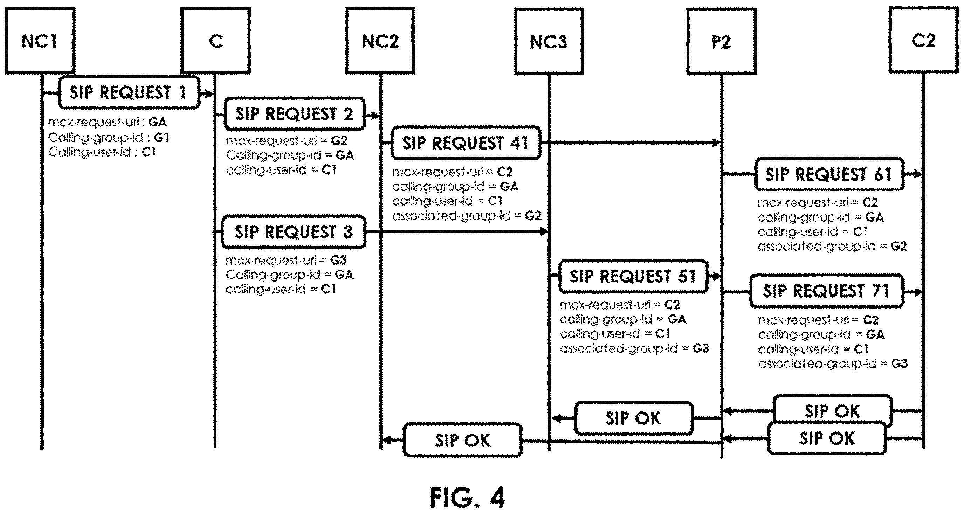

Le procédé est aussi représenté sous la forme d'un échange de données à la Figure 4. Les requêtes SIP REQUEST 41, 51, 61 et 71 de la figure 4 comprennent toutes l'information de groupe d'appartenance du serveur non-contrôleur émetteur de la requête dans le champ d'en-tête <associated-group-id>. Le serveur non-contrôleur émetteur de la requête est le serveur non-contrôleur qui va transmettre au serveur participant gérant le client destinataire C2, à l'étape 16, la requête reçue du serveur contrôleur C. Le groupe d'appartenance du serveur non-contrôleur est le groupe qu'il gère. Par exemple, pour le serveur non-contrôleur NC2, l'information de groupe d'appartenance du serveur non-contrôleur émetteur de la requête est une information indiquant le groupe G2.

Dans une variante optionnelle dans laquelle au moins un serveur non-contrôleur gère plusieurs groupes de communication, le serveur non-contrôleur gérant plusieurs groupes de communication réalise une étape F1 de filtrage de requête. En effet, un serveur non-contrôleur gérant plusieurs groupes de communication va recevoir plusieurs requêtes identiques à destination des groupes de communication qu'il gère. Pour réaliser ce filtrage F1, le serveur non-contrôleur comprend ou récupère un fichier de configuration ou une donnée de configuration, indiquant au moins une règle de filtrage. Cette règle de filtrage peut par exemple dépendre de paramètres des différents groupes de communication gérés par le serveur non-contrôleur, et/ou dépendre du profil utilisateur de l'entité destinatrice C2, afin par exemple de faire dépendre le filtrage d'un rôle futur de l'entité destinatrice C2 au sein du service annoncé par les requêtes. Par exemple, le filtrage peut permettre de choisir une requête correspondant à un groupe de communication dans laquelle l'entité cliente destinatrice a un rôle plus important que dans un autre groupe de communication parmi les groupes de communication gérés par le serveur non-contrôleur. Ainsi, le serveur non-contrôleur gérant plusieurs groupes de communication ne transmettra qu'une requête pour un groupe de communication parmi les groupes de communication qu'il gère.

Dans une étape 16, la requête est transmise par chaque serveur non-contrôleur NC2 et NC3 aux serveurs participants gérant les entités clientes déterminées à l'étape 14. A cette étape 16 de transmission, chaque requête comprend déjà l'information de groupe constituant au titre duquel l'entité cliente destinataire reçoit la requête, c'est-à-dire l'information de groupe constituant auquel appartient le serveur non-contrôleur émetteur de la requête à l'étape 16. Chaque serveur participant recevant la requête la transmet à chaque entité cliente qu'il gère. Dans une variante optionnelle et compatible avec la variante de filtrage précédente, le serveur participant recevant la requête réalise un filtrage F2 des requêtes qu'il reçoit pour n'en garder qu'une. Pour réaliser ce filtrage F2, le serveur participant comprend ou récupère un fichier de configuration ou une donnée de configuration, indiquant au moins une règle de filtrage. Cette règle de filtrage peut indiquer de ne transférer à l'entité cliente destinataire C2 que la première requête pour un même service. Alternativement, la règle de filtrage peut dépendre de l'information d'appartenance de groupe de communication ajoutée et être mise en oeuvre sur toutes les requêtes reçues pour un même service par exemple dans un intervalle de temps prédéfini. Cette règle de filtrage peut alors par exemple dépendre de paramètres des différents groupes de communication, et/ou dépendre du profil utilisateur de l'entité destinataire C2, afin par exemple de faire dépendre le filtrage d'un rôle futur de l'entité destinataire C2 au sein du service annoncé par les requêtes. Par exemple, le filtrage peut permettre de choisir une requête correspondant à un groupe de communication dans laquelle l'entité cliente destinatrice a un rôle plus important que dans un autre groupe de communication parmi les groupes de communication compris dans les requêtes reçues pour un même service. Ainsi, le serveur participant P2 ne transmettra qu'une requête pour un groupe de communication parmi les requêtes reçues pour un même service. Le serveur participant peut alors rejeter les requêtes filtrées en envoyant une information de rejet au serveur non-contrôleur lui ayant envoyé la requête, le rejet ayant pour motif le même motif que l'entité cliente destinataire C2 utiliserait, afin de ne pas risquer d'annuler la communication. Dans cette variante dans laquelle le serveur participant réalise le filtrage F2, l'entité cliente destinataire C2 ne réalise alors pas de filtrage.

L'information de groupe constituant ajoutée dans la requête est recopiée par le serveur participant P2 dans la requête qu'il transmet ensuite à l'entité cliente destinatrice C2. Ainsi, à la requête SIP REQUEST 61 est ajoutée l'information de groupe constituant G2, par le serveur participant P2, préférentiellement dans un champ d'en-tête « associated-group-id ». De la même façon, à la requête SIP REQUEST 71 est ajoutée l'information de groupe constituant G3, par le serveur participant P2, préférentiellement dans un champ d'en-tête « associated-group-id ».

Chaque entité cliente destinataire déterminée à l'étape 14 reçoit donc au moins une requête de service de mission critique à une étape 17. Au moins une entité cliente destinataire, par exemple l'entité cliente destinataire C2 reçoit deux requêtes de service de mission critique, par exemple une première requête de service de mission critique SIP REQUEST 61 du serveur participant P2 provenant du serveur non-contrôleur NC2 du deuxième groupe de communication G2 et d'une deuxième requête de service de mission critique SIP REQUEST 71 du serveur participant P2 provenant du serveur non-contrôleur NC3 du troisième groupe de communication G3. Chaque requête reçue SIP REQUEST 61 et SIP REQUEST 71 comprend l'information de groupe d'appartenance du serveur non-contrôleur émetteur de la requête, c'est-à-dire le groupe G2 auquel appartient le serveur non-contrôleur NC2 pour la requête SIP REQUEST 6 et le groupe G3 pour le serveur non-contrôleur NC3 pour la requête SIP REQUEST 7.

Lorsque l'entité cliente C2 reçoit une première requête, l'entité cliente destinataire C2 peut être configurée pour débuter un intervalle de temps d'attente d'autres requêtes identiques comprenant l'information de groupe constituant d'appartenance du serveur non-contrôleur émetteur de la requête. Un tel intervalle de temps est de par exemple 10 secondes. Si l'entité cliente destinataire C2 reçoit une autre requête dans cet intervalle de temps, l'entité cliente destinataire C2 devra, à la fin de l'intervalle de temps, choisir entre les requêtes identiques, à l'exception de l'information de groupe constituants, reçues dans l'intervalle de temps quelle requête elle accepte et quelles requêtes elle rejette. Alternativement, après la réception de la première requête, l'entité cliente destinataire C2 peut déterminer, à partir d'un fichier de configuration du regroupement de groupes GA qu'elle stocke et l'information de groupe d'appartenance du serveur non-contrôleur émetteur de la requête, quelles autres requêtes elle va recevoir car elle a connaissance des groupes auxquels elle appartient et des groupes compris dans le regroupement de groupes GA. L'entité cliente destinataire C2 peut alors faire son choix de requête avant même d'avoir reçu toutes les requêtes, et rejeter ou accepter la première requête puis chaque requête subsidiaire dès leur réception. Dans la variante dans laquelle le serveur participant P2 réalise le filtrage F2, l'entité cliente destinataire C2 ne réalise alors pas le filtrage décrit ici.

L'invention comprend donc ensuite au moins une étape 18 d'acceptation, par l'entité cliente destinataire C2, d'une requête parmi les requêtes reçues en fonction de l'information de groupe d'appartenance du serveur non-contrôleur émetteur de la requête. Pour cela, l'entité cliente destinataire C2 est configurée pour faire un choix automatiquement, par exemple en fonction d'une configuration de l'entité cliente, ou pour faire un choix manuellement, par exemple en proposant à un utilisateur, via une alerte affichée sur un écran de l'entité cliente destinataire C2, les requêtes reçues afin que l'utilisateur choisisse quelle requête accepter. Le choix peut être réalisé automatiquement en fonction d'au moins un rôle de l'entité cliente destinataire C2 dans chaque groupe identifié par l'information de groupe d'appartenance du serveur non-contrôleur émetteur de la requête de chaque requête reçue, ou par exemple en fonction d'un groupe préféré parmi ces groupes identifiés. Dans la variante dans laquelle le serveur participant P2 réalise le filtrage F2, l'entité cliente destinataire C2 ne réalise alors pas le choix de requête décrit ici.

Le procédé 1 comprend une étape optionnelle 19 de rejet des requêtes non acceptées à l'étape 18, ce afin d'informer le serveur non-contrôleur via le serveur participant ayant transmis la requête rejetée à l'entité cliente destinataire C2 que la requête est rejetée. L'information de rejet de la requête comprend un motif de rejet, par exemple « requête acceptée au titre d'un autre groupe constituant ». Ce motif permet d'éviter que le serveur non-contrôleur ne remonte au serveur contrôleur C une information que l'entité cliente destinataire C2 a rejeté la requête et que le serveur contrôleur C annule l'appel lorsque le service de mission critique est un appel. En effet, dans un appel avec participation obligatoire, en cas de rejet d'un des participants, l'appel peut être amené à être annulé. En informant le serveur non-contrôleur du rejet pour un nouveau motif, c'est-à-dire en l'informant que la requête est rejetée mais qu'une autre requête a été acceptée pour le même service, le service ne sera pas annulé, car le serveur non-contrôleur peut considérer que la participation de l'utilisateur à la transaction est malgré tout assurée. Dans la variante dans laquelle le serveur participant P2 réalise le filtrage F2, l'entité cliente destinataire C2 ne réalise alors pas le rejet de requête décrit ici.

Ainsi, le procédé selon l'invention permet d'éviter qu'une entité cliente n'accepte plusieurs requêtes identiques et donc ne crée plusieurs communications identiques parallèles. Lorsque le service est un service données MCData, l'invention peut être utilisée pour n'envoyer qu'un accusé de réception suite à la réception par l'entité cliente destinataire d'une pluralité de messages « delivery » ou « read » identiques.

## Revendications

1. Procédé (1) de discrimination, par une première entité cliente destinataire (C2), de requêtes dans un réseau de communication selon le standard 3GPP MCS « 3rd Generation Partnership Program Mission-Critical System », le réseau de communication comprenant au moins :
- un groupe global de communication (GA) regroupant une pluralité de groupes de communication (G1, G2, G3),
- au moins une entité cliente émettrice (C1) affiliée à un premier groupe de communication (G1) de la pluralité de groupes de communication (G1, G2, G3),
- l'entité cliente destinataire (C2), affiliée au moins à un deuxième (G2) et à un troisième (G3) groupes de communication de la pluralité de groupes de communication (G1, G2, G3),
- un serveur contrôleur (C) en charge de la gestion du groupe global de communication (GA),
- au moins un serveur participant (P1, P2) gérant chaque entité cliente,
- pour chaque groupe de communication de la pluralité de groupes de communication (G1, G2, G3) :
o au moins un serveur non-contrôleur (NC1, NC2, NC3) du groupe global de communication (GA) en charge de la gestion du groupe de communication (G1, G2, G3),
le procédé comprenant au moins les étapes de :
- transmission (11), par l'entité émettrice (C1), via le serveur participant (P1) gérant l'entité émettrice et le serveur non-contrôleur (NC1) du premier groupe (G1), au serveur contrôleur (C), d'une requête de service de mission critique au sein du groupe global (GA),
- détermination (12), par le serveur contrôleur (C), des groupes de communication compris dans le groupe global de communication (GA),
- transmission (13) de la requête de service de mission critique, par le serveur contrôleur (C), au serveur non-contrôleur de chaque groupe de communication déterminé comme compris dans le groupe global de communication (GA),
- détermination (14), par chaque serveur non-contrôleur, des entités clientes destinataires de la requête de service mission critique,
- transmission (16) de la requête de service de mission critique, par chaque serveur non-contrôleur, à chaque entité cliente destinataire déterminée (14), via le serveur participant gérant l'entité cliente destinataire déterminée,
- réception (17) d'au moins une première requête de service de mission critique provenant du serveur non-contrôleur du deuxième groupe de communication et d'une deuxième requête de service de mission critique provenant du serveur non-contrôleur du troisième groupe de communication, par la première entité cliente destinataire (C2), chaque requête reçue comprenant au moins une information de groupe d'appartenance du serveur non-contrôleur émetteur de la requête,
- acceptation (18), par la première entité cliente destinataire (C2), d'une requête parmi la première et la deuxième requête en fonction de l'information de groupe d'appartenance du serveur non-contrôleur émetteur de la requête.

2. Procédé (1) selon la revendication précédente comprenant une étape d'ajout (15), à la requête, de l'information de groupe d'appartenance du serveur non-contrôleur émetteur de la requête.

3. Procédé (1) selon la revendication précédente dans lequel l'étape d'ajout (15) à la requête de l'information de groupe d'appartenance du serveur non-contrôleur émetteur de la requête est mise en oeuvre par le serveur non-contrôleur avant l'étape de transmission (15) de la requête par le serveur non-contrôleur.

4. Procédé (1) selon l'une des revendications précédentes comprenant une étape de rejet (19) de la requête non acceptée parmi la première et la deuxième requête en fonction de l'information de groupe d'appartenance du serveur non-contrôleur émetteur de la requête.

5. Procédé (1) selon la revendication précédente dans lequel le rejet comprend l'envoi d'une requête de rejet, de la première entité cliente destinataire (C2) au serveur non-contrôleur émetteur de la requête de service de mission critique rejetée.

6. Procédé (1) selon l'une des revendications précédentes dans lequel l'acceptation de la requête est réalisée sur la base d'une configuration de l'entité cliente destinataire (C2).

7. Réseau de communication selon le standard 3GPP MCS « 3rd Generation Partnership Program Mission-Critical System », le réseau de communication comprenant au moins :
- un groupe global de communication (GA) regroupant une pluralité de groupes de communication (G1, G2, G3),
- au moins une entité cliente émettrice (C1) affiliée à un premier groupe de communication (G1) de la pluralité de groupes de communication (G1, G2, G3),
- au moins une entité cliente destinataire (C2), affiliée au moins à un deuxième (G2) et à un troisième (G3) groupes de communication de la pluralité de groupes de communication (G1, G2, G3),
- un serveur contrôleur (C) en charge de la gestion du groupe global de communication (GA),
- au moins un serveur participant (P1, P2) gérant chaque entité cliente affiliée au groupe de communication (G1, G2, G3),
- pour chaque groupe de communication de la pluralité de groupes de communication (G1, G2, G3) :
∘ au moins un serveur non-contrôleur (NC1, NC2, NC3) du groupe global de communication (GA) en charge de la gestion du groupe de communication (G1, G2, G3),
le réseau de communication étant configuré pour mettre en oeuvre le procédé (1) selon l'une quelconque des revendication précédentes.

8. Réseau selon la revendication précédente **caractérisé en ce qu'**il est un réseau de troisième génération « 3G », de quatrième génération « 4G » ou de cinquième génération « 5G », dans lequel le premier dispositif utilisateur est un équipement utilisateur « UE », le premier réseau comprenant au moins un coeur de réseau et au moins un réseau d'accès radio « RAN ».

9. Produit programme d'ordinateur comprenant des instructions qui conduisent le réseau selon la revendication 8 à exécuter les étapes de la méthode selon l'une des revendications 1 à 7.

10. Support lisible par ordinateur, sur lequel est enregistré le programme d'ordinateur selon la revendication 9.
